# EUROPEAN PATENT APPLICATION

(11) **EP 4 822 158 A1**
(43) Date of publication of application: **14.10.2026**
(21) Application number: 26170879.6
(22) Date of filing: 07.04.2026
(51) Int. Cl.: F02C 7/27, F02C 7/272

(54) **START MECHANISM FOR SMALL ENGINES**

(30) Priority: 07.04.2025 US 202519172042
(71) Applicant: RTX Corporation, Farmington, CT 06032 (US)
(72) Inventor: Binek, Lawrence A, Glastonbury, CT, 06033 (US); Bugin, Yoel, Port St Lucie, FL, 34983 (US); Paulino, Jose R., Jupiter, FL, 33478 (US)
(74) Representative: Schmitt-Nilson Schraud Waibel Wohlfrom Patentanwälte Partnerschaft mbB

(57) **Abstract**

A start mechanism for a propulsion system including a receptacle in operative communication with a case; at least one portable source of energy disposed within the receptacle; a flow channel fluidly coupled to the receptacle; and a turbine flow path within the case, the turbine flow path fluidly coupled to the flow channel; wherein the at least one portable source of energy is configured to produce at least one of electrical energy and a source of chemical energy.

## Description

The present disclosure is directed to the improved start mechanism for small engines.

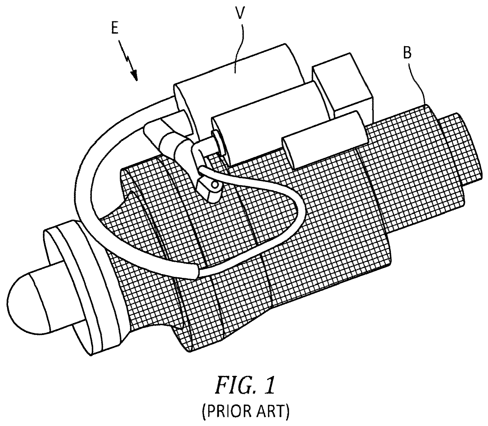

For a prior art small engine E as shown in Fig. 1, the gas turbine engine E requires a charge of compressed air or rapidly expanding gas to initially start the gas turbine engine E. The initial charge of compressed air requires a portable volume of air to start the engine or an expensive pyrotechnic start cartridge gas generator. This volume is conventionally held in a separate pressure vessel (cartridge) V attached to the small engine E. The separate pressure vessel(cartridge) V adds weight, cost and part count to the small engine design.

In accordance with the present disclosure, there is provided a start mechanism for a propulsion system comprising a receptacle in operative communication with a case; at least one portable source of energy disposed within the receptacle; a flow channel fluidly coupled to the receptacle; and a turbine flow path within the case, the turbine flow path fluidly coupled to the flow channel; wherein the at least one portable source of energy is configured to produce at least one of electrical energy and a source of chemical energy.

Particular embodiments further may include at least one, or a plurality of, the following optional features, alone or in combination with each other:

A further embodiment of any of the foregoing embodiments may additionally and/or alternatively include the at least one portable source of energy is a battery.

A further embodiment of any of the foregoing embodiments may additionally and/or alternatively include the battery is selected from the group comprising lithium cobalt oxide (LCO), nickel manganese cobalt (NMC), LCO/NMC, lithium iron phosphate (LFP), lithium manganese oxide (LMO), lithium titanate oxide(LTO), LTO-NMC, nickel cobalt aluminum (NCA), NMC/LMO, and combinations thereof.

A further embodiment of any of the foregoing embodiments may additionally and/or alternatively include the at least one portable source of energy is configured after initiation to produce a converted chemical energy.

A further embodiment of any of the foregoing embodiments may additionally and/or alternatively include the converted chemical energy comprises an expanding fluid.

A further embodiment of any of the foregoing embodiments may additionally and/or alternatively include at least one portable source of energy is configured to be initiated by at least one of being overheated, crushed, penetrated to expose air to a source of chemical energy, overcharged electrically, internally shorted, mixed with multiple chemicals and combinations thereof.

A further embodiment of any of the foregoing embodiments may additionally and/or alternatively include the flow channel is located within a portion of the case, the portion comprising at least one of a strut and a guide vane.

In accordance with the present disclosure, there is provided a gas turbine engine having a start mechanism comprising a case supporting a turbine section having a turbine rotor; a receptacle in operative communication with a case; at least one battery disposed within the receptacle; a flow channel fluidly coupled to the receptacle; and a turbine flow path proximate the turbine rotor within the case, the turbine flow path fluidly coupled to the flow channel; wherein the at least one battery is configured to produce at least one of electrical energy and a source of chemical energy; wherein the source of chemical energy is configured, after initiation, to produce a converted chemical energy, wherein the converted chemical energy comprises a rapidly expanding fluid.

Particular embodiments further may include at least one, or a plurality of, the following optional features, alone or in combination with each other:

A further embodiment of any of the foregoing embodiments may additionally and/or alternatively include the receptacle comprises a shell layer, the shell layer configured to provide a resistive barrier between a receptacle interior and a receptacle exterior.

A further embodiment of any of the foregoing embodiments may additionally and/or alternatively include the shell layer is configured to provide at least one of a pressure barrier, a thermal barrier and a chemical barrier and combinations thereof.

A further embodiment of any of the foregoing embodiments may additionally and/or alternatively include the receptacle comprises insulation, the insulation configured to manage thermal energy transfer.

A further embodiment of any of the foregoing embodiments may additionally and/or alternatively include the gas turbine engine having the start mechanism further comprising a burst disk structure formed within an interior of the receptacle, the burst disk configured to employ during an initiation of the source of chemical energy and configured for the converted chemical energy to flow from the receptacle to the flow channel.

A further embodiment of any of the foregoing embodiments may additionally and/or alternatively include the flow channel is fluidly coupled with a nozzle, the nozzle configured to direct an expanding converted chemical energy toward the turbine rotor.

In accordance with the present disclosure, there is provided a process of forming a gas turbine engine having a start mechanism comprising forming a case supporting a turbine section having a turbine rotor; forming a receptacle in operative communication with a case; disposing at least one battery within the receptacle; forming a flow channel fluidly coupled to the receptacle; forming a turbine flow path proximate the turbine rotor within the case; fluidly coupling the turbine flow path to the flow channel; configuring the at least one battery to produce at least one of electrical energy and a source of chemical energy; and configuring the source of chemical energy, after initiation, to produce a converted chemical energy, wherein the converted chemical energy comprises a rapidly expanding fluid.

Particular embodiments further may include at least one, or a plurality of, the following optional features, alone or in combination with each other:

A further embodiment of any of the foregoing embodiments may additionally and/or alternatively include the process further comprising forming a shell layer with the receptacle; and configuring the shell layer to provide a resistive barrier between a receptacle interior and a receptacle exterior.

A further embodiment of any of the foregoing embodiments may additionally and/or alternatively include the process further comprising configuring the shell layer to provide at least one of a pressure barrier, a thermal barrier and a chemical barrier and combinations thereof.

A further embodiment of any of the foregoing embodiments may additionally and/or alternatively include the process further comprising forming the receptacle comprising insulation; and configuring the insulation to manage thermal energy transfer.

A further embodiment of any of the foregoing embodiments may additionally and/or alternatively include the process further comprising forming a burst disk structure within an interior of the receptacle; configuring the burst disk structure to deploy during an initiation of the source of chemical energy; and configuring the burst disk structure to pass the converted chemical energy to flow from the receptacle to the flow channel.

A further embodiment of any of the foregoing embodiments may additionally and/or alternatively include the process further comprising fluidly coupling the flow channel with a nozzle; and configuring the nozzle to direct an expanding converted chemical energy toward the turbine rotor.

A further embodiment of any of the foregoing embodiments may additionally and/or alternatively include the at least one battery is selected from the group comprising lithium cobalt oxide (LCO), nickel manganese cobalt (NMC), LCO/NMC, lithium iron phosphate (LFP), lithium manganese oxide (LMO), lithium titanate oxide(LTO), LTO-NMC, nickel cobalt aluminum (NCA), NMC/LMO, and combinations thereof.

Other details of the start mechanism for propulsion systems are set forth in the following detailed description and the accompanying drawings wherein like reference numerals depict like elements.

The above and further advantages of this disclosure may be better understood by referring to the following description in conjunction with the accompanying drawings, in which like reference numerals indicate like elements and features in the various figures. Letters may be appended to reference numbers to distinguish from reference numbers for similar features and to indicate a correspondence to other features in the drawings. For clarity, not every element may be labeled in every figure. The drawings are not necessarily to scale, emphasis instead being placed upon illustrating the principles of the disclosure.
Fig. 1 is an isometric view of a schematic representation of a prior art gas turbine engine.
Fig. 2 is a cross sectional view schematic representation of an exemplary gas turbine engine.
Fig. 3 is a partial cross sectional view schematic representation of an exemplary gas turbine engine.
Fig. 4 is a partial cross sectional view schematic representation of an exemplary gas turbine engine with exemplary start mechanism.

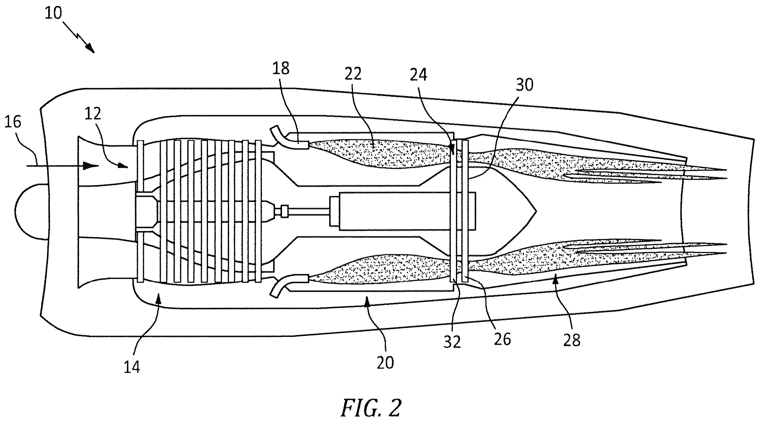

Referring now to Fig. 2, there is illustrated an exemplary gas turbine engine, specifically a turbojet engine 10. The gas turbine engine 10 includes an inlet section 12 upstream of a compressor section 14 where air 16 is drawn in and compressed. Fuel 18 is injected into a combustion section 20 downstream of the compressor section 14. The air 16 is mixed with fuel 18 and burned in the combustion section 20. The combusted fuel 18 and air 16 are combined into a highly energized combustion product 22 (products of combustion 22) that expands through a turbine section 24. The products of combustion 22 move downstream over turbine rotors 26, driving the turbine rotors 26 to rotate creating rotary power. The products of combustion 22 move downstream and exit the turbine section 24 to the exhaust nozzle section 28 where engine thrust is developed for propulsion.

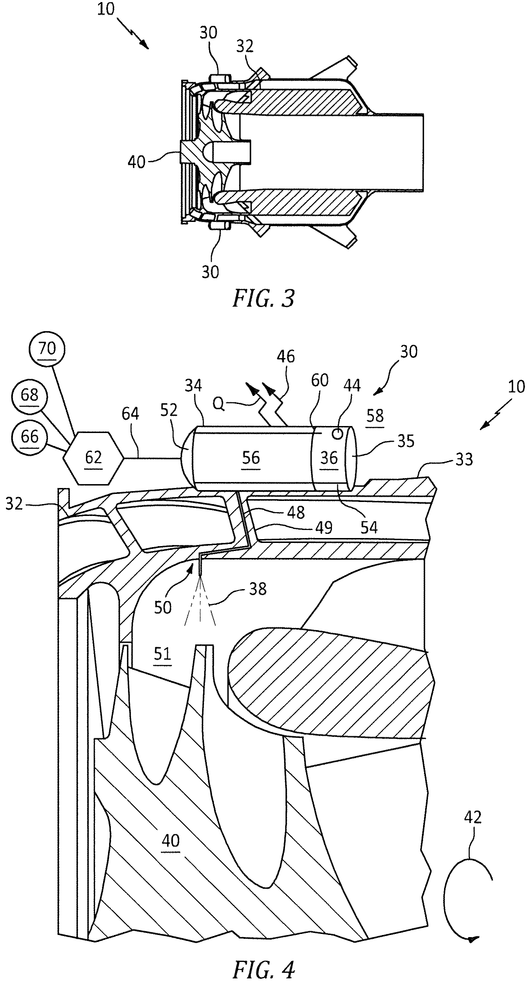

Referring also to Fig. 3 and Fig 4 the exemplary gas turbine engine 10 with exemplary start mechanism 30 is shown. The start mechanism 30 is shown in operative communication with a case 32 of the gas turbine engine 10. There can be multiple start mechanisms 30. It is contemplated that the start mechanism 30 can also be located in other sections of the gas turbine engine 10, such as within cavities formed within the case 32, at an exterior surface 33 of the case and the like.

The start mechanism 30 includes a receptacle 34. The receptacle 34 is configured to structurally contain a portable source of energy 35. The portable source of energy 35 can contain both electrical energy 46 and a source of chemical energy 36. The receptacle 34 is also configured to deliver converted chemical energy 38 to a rotor 40 of the gas turbine engine 10 for conversion of the converted chemical energy 38 into rotary mechanical energy 42 of the rotor 40. The rotary mechanical energy 42 can be employed to start the gas turbine engine 10.

The source of chemical energy 36 can include a chemical or chemicals that when initiated can produce the converted chemical energy 38, such as a rapidly expanding fluid. The converted chemical energy 38 can include a gas under high pressure, such as, for example, from about 1200 pounds per square inch to about 1800 pounds per square inch. In an exemplary embodiment, the high pressure gas can be approximately 1500 pounds per square inch. The converted chemical energy 38 can be at temperatures of less than 2200 degrees Fahrenheit.

The source of chemical energy 36 can be initiated in a number of ways such as by being overheated, crushed, penetrated to expose air to the source of chemical energy 36, overcharged electrically, internally shorted, by mixing multiple chemicals and the like. Abuse methods range from using a projective-type puncture, crushing, wedge-shaped penetration, and thermal exposure. Each method can produce different gas generation rates. The converted chemical energy 38 can be generated by rapid creation of thermal energy with subsequent temperature rise in the chemicals and an increased reaction rate that repeats until exhaustion of the chemical energy 36.

In an exemplary embodiment, the source of chemical energy 36 can include a battery 44 or multiple batteries 44. The battery 44 can be selected from a diverse group of battery chemistries. In an exemplary embodiment the battery 44 can be a lithium ion battery. Different battery 44 chemistries can be explored however Lithium-Titanate (LTO)and Lithium nickel manganese cobalt oxide (NMC) generate the most gas. The benefit of LTO batteries is they can be kept in a discharged state for storage and charged quickly for application. The battery 44 chemistry can include but not be limited to lithium cobalt oxide (LCO), nickel manganese cobalt (NMC), LCO/NMC, lithium iron phosphate (LFP), lithium manganese oxide (LMO), lithium titanate oxide(LTO), LTO-NMC, nickel cobalt aluminum (NCA), NMC, NMC/LMO, Solid state and the like. The battery 44 can be packaged in the form of a button, a cylinder, a pouch, prismatic form, laptop pack, modules, Electric Vehicle (EV) modules, EV pack and the like.

The battery 44 can provide both electrical energy 46 and converted chemical energy 38. The battery 44 can support electrical needs of the gas turbine engine 10 prior to being expended as converted chemical energy 38 for engine start. The battery 44 can provide stored electrical energy 46 for use to electrically spin a generator on a cold start of the gas turbine engine 10.

The receptacle 34 can be fluidly coupled to a flow channel 48. The flow channel 48 can be located within a portion 49 of the case 32 such as a strut, guide vane and the like. There can be a single flow channel 48 or multiple flow channel(s) 48. The flow channel 48 can be fluidly coupled with a nozzle 50. The nozzle 50 can be configured to direct the rapidly expanding high pressure converted chemical energy 38 toward the rotor 40. In an exemplary embodiment, the nozzle 50 can direct the expanding fluid toward the turbine rotor 26 into a turbine flow path 51.

The receptacle 34 can include insulation 52 configured to manage thermal energy Q transfer. The insulation 52 can be configured to protect the source of chemical energy 36 from unwanted heat. The insulation 52 can be configured to manage exothermal reactions of the source of chemical energy 36.

The receptacle 34 can include a shell layer/coating 54. The coating 54 can be configured to provide a resistive barrier between a receptacle interior 56 and a receptacle exterior 58. The coating 54 can also serve to provide a pressure barrier, thermal barrier and chemical barrier and the like.

A burst disk 60 structure can be formed within the interior 56. The burst disk 60 can be employed during the initiation of the stored chemical energy 36. The burst disk 60 can allow for the converted chemical energy 38 to flow from the receptacle 34 to the flow channel 48 and nozzle 50.

The receptacle 34 can be configured to ensure a thermal runaway event is timely such that the exothermic chemical decomposition of the source of chemical energy 36 stored within the receptacle 34 is accelerated by confinement to an enclosed space.

The receptacle 34 can be formed integral with the case 32, such as by additive manufacturing techniques.

The start mechanism 30 can include a control system 62. The control system 62 may include hardware, firmware, and/or software components that are configured to perform the functions disclosed herein, including the functions of the start mechanism 30. While not specifically shown, the control system 62 may include other computing devices (e.g., servers, mobile computing devices, etc.) and computer aided manufacturer (CAM) systems which may be in communication with each other and/or the control system 62 via a communication network 64 to perform one or more of the disclosed functions. The control system 62 may include at least one processor 66 (e.g., a controller, microprocessor, microcontroller, digital signal processor, etc.), memory 68, and an input/output (I/O) subsystem 70. The control system 62 may be embodied as any type of computing device e.g., a server, an enterprise computer system, a network of computers, a combination of computers and other electronic devices, or other electronic devices. Although not specifically shown, the I/O subsystem 70 typically includes, for example, an I/O controller, a memory controller, and one or more I/O ports. The processor 66 and the I/O subsystem 70 are communicatively coupled to the memory 68. The memory 68 may be embodied as any type of computer memory device (e.g., volatile memory such as various forms of random access memory).

A technical advantage of the disclosed start mechanism for propulsion systems includes a readily available energy source for the engine.

Another technical advantage of the disclosed start mechanism for propulsion systems includes a more readily available energy for the engine.

Another technical advantage of the disclosed start mechanism for propulsion systems includes a device that minimizes the engine size for improved vehicle integration.

Another technical advantage of the disclosed start mechanism for propulsion systems includes a battery starter pack easily integrated into the engine structure.

There has been provided a start mechanism for propulsion systems. While the start mechanism for propulsion systems has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A start mechanism for a propulsion system comprising:
a receptacle in operative communication with a case;
at least one portable source of energy disposed within the receptacle;
a flow channel fluidly coupled to the receptacle; and
a turbine flow path within the case, the turbine flow path fluidly coupled to the flow channel; wherein the at least one portable source of energy is configured to produce at least one of electrical energy and a source of chemical energy.

2. The start mechanism for a propulsion system according to claim 1, wherein the at least one portable source of energy is a battery; and/or
wherein the battery is selected from the group comprising lithium cobalt oxide (LCO), nickel manganese cobalt (NMC), LCO/NMC, lithium iron phosphate (LFP), lithium manganese oxide (LMO), lithium titanate oxide(LTO), LTO-NMC, nickel cobalt aluminum (NCA), NMC/LMO, and combinations thereof.

3. The start mechanism for a propulsion system according to claims 1 or 2, wherein the at least one portable source of energy is configured after initiation to produce a converted chemical energy; and/or
wherein the converted chemical energy comprises an expanding fluid.

4. The start mechanism for a propulsion system according to any of claims 1 to 3, wherein at least one portable source of energy is configured to be initiated by at least one of being overheated, crushed, penetrated to expose air to a source of chemical energy, overcharged electrically, internally shorted, mixed with multiple chemicals and combinations thereof.

5. The start mechanism for a propulsion system according to any of claims 1 to 4, wherein the flow channel is located within a portion of the case, the portion comprising at least one of a strut and a guide vane.

6. A gas turbine engine having a start mechanism according to any of the previous claims, the gas turbine engine comprising:
a case supporting a turbine section having a turbine rotor;
wherein the receptacle of the start mechanism is in operative communication with the case;
wherein the at least one portable source of energy of the start mechanism is disposed within the receptacle;
wherein the flow channel of the start mechanism is fluidly coupled to the receptacle; and
wherein the turbine flow path of the start mechanism is proximate the turbine rotor within the case;
wherein particularly the at least one portable source of energy of the start mechanism is a battery; wherein particularly the battery is configured to produce at least one of electrical energy and a source of chemical energy; wherein particularly the at least one portable source of energy is configured after initiation to produce a converted chemical energy; wherein particularly the converted chemical energy comprises an expanding fluid.

7. The gas turbine according to claim 6, wherein the receptacle comprises a shell layer, the shell layer configured to provide a resistive barrier between a receptacle interior and a receptacle exterior.

8. The gas turbine engine according to claim 6 or 7,
wherein the shell layer is configured to provide at least one of a pressure barrier, a thermal barrier and a chemical barrier and combinations thereof.

9. The gas turbine engine according to any of claims 6 to 8, wherein the receptacle comprises insulation, the insulation configured to manage thermal energy transfer.

10. The gas turbine engine according to any of claims 6 to 9, further comprising:
a burst disk structure formed within an interior of the receptacle, the burst disk configured to employ during an initiation of the source of chemical energy and configured for the converted chemical energy to flow from the receptacle to the flow channel.

11. The gas turbine engine according to any of claims 6 to 10, wherein the flow channel is fluidly coupled with a nozzle, the nozzle configured to direct an expanding converted chemical energy toward the turbine rotor.

12. A process of forming a gas turbine engine having a start mechanism comprising:
forming a case supporting a turbine section having a turbine rotor;
forming a receptacle in operative communication with a case;
disposing at least one battery within the receptacle;
forming a flow channel fluidly coupled to the receptacle;
forming a turbine flow path proximate the turbine rotor within the case;
fluidly coupling the turbine flow path to the flow channel; configuring the at least one battery to produce at least one of electrical energy and a source of chemical energy; and
configuring the source of chemical energy, after initiation, to produce a converted chemical energy, wherein the converted chemical energy comprises a rapidly expanding fluid.

13. The process according to claim 12, further comprising:
forming a shell layer with the receptacle; and
configuring the shell layer to provide a resistive barrier between a receptacle interior and a receptacle exterior; and/or
further comprising:
configuring the shell layer to provide at least one of a pressure barrier, a thermal barrier and a chemical barrier and combinations thereof.

14. The process according to claim 12 or 13, further comprising:
forming the receptacle comprising insulation; and
configuring the insulation to manage thermal energy transfer; and/or
further comprising:
forming a burst disk structure within an interior of the receptacle;
configuring the burst disk structure to deploy during an initiation of the source of chemical energy; and
configuring the burst disk structure to pass the converted chemical energy to flow from the receptacle to the flow channel.

15. The process according to any of claims 12 to 14, further comprising:
fluidly coupling the flow channel with a nozzle; and
configuring the nozzle to direct an expanding converted chemical energy toward the turbine rotor; and/or
wherein the at least one battery is selected from the group comprising lithium cobalt oxide (LCO), nickel manganese cobalt (NMC), LCO/NMC, lithium iron phosphate (LFP), lithium manganese oxide (LMO), lithium titanate oxide(LTO), LTO-NMC, nickel cobalt aluminum (NCA), NMC/LMO, and combinations thereof.
